# EUROPEAN PATENT APPLICATION

(11) **EP 1 785 989 A1**
(43) Date of publication of application: **16.05.2007**
(21) Application number: 05110660.7
(22) Date of filing: 11.11.2005
(51) Int. Cl.: G11B 7/09

(54) **Pickup for optical recording media and device having the pickup**

(71) Applicant: DEUTSCHE THOMSON-BRANDT GMBH, 78048 Villingen-Schwenningen (DE)
(72) Inventor: Bammert, Michael, 78739, Hardt (DE); Dupper, Rolf, 78050, Villingen-Schwenningen (DE); Suzuki, Tsuneo, 78087, Mönchweiler (DE)
(74) Representative: Thies, Stephan

(57) **Abstract**

The invention refers to a pickup (P) for optical recording media having information tracks (Tr) in a layer, and to a device for accessing optical recording media having such pickup. The pickup has a focusing servo for position control in a focussing direction (F) orthogonal to the layer, a tracking servo for position control in a tracking direction (T) within the layer and diagonal to the information tracks (Tr), and a movable actuator (A) with a coil (PCF, PCT) on a flat coil support (CS) interacting with a magnet (M) on a pickup base (B) and a yoke (Y), where the actuator carries a lens (L) and the coil support (CS) faces a surface of the magnet (M) both parallel to a plane of motion spanned by the tracking direction (T) and the focus direction (F). In order to increase actuator sensitivity without increasing actuator size, a center of the yoke (Y) is offset, in the tracking direction (T), relative to the lens (L) so that the yoke (Y) can be placed alongside the lens (L).

## Description

### Field of the invention

The present invention relates to a pickup for optical recording media, in particular to a mechanical layout thereof, and to a device for accessing optical recording media having the pickup.

### Background of the invention

Apparatus to read or write optical recording media with information tracks in a planar layer uses a pickup with an actuator having a movable part carrying a lens to access locations of the layer. For following the information tracks, the medium and the pickup are being moved relative to each other. When accessing the media, a tracking error may occur, constituting a position error within the layer in the so-called tracking direction which is at least substantially diagonal or perpendicular to the information tracks; and a focus error may occur, constituting a position error in the so-called focussing direction which is at least substantially perpendicular to the layer. These errors are typically compensated for by a tracking servo and a focussing servo, respectively, which use coil-magnet pairs, often also called voice coils or voice coil motors VCM, or other transducers to quickly correct the position of the movable part of the actuator relative to the pickup.

Together, the tracking direction and the focus direction span a plane of motion in which the focussing and tracking motions of the actuator take place. For this motion, the movable part of the actuator is suspended by elastic suspension wires oriented in parallel and at right angles to the plane of motion. This direction will also be called information direction in the following, because it is the direction of the tangent to the information track.

EP 1098304 A shows a pickup for optical recording media with a tracking servo and a focus servo, which has a actuator with coils on a movable part interacting with a magnet on a pickup base, where the coils are supported on a flat coil support facing a surface of the magnet, and where the coil support and the magnet surface are oriented parallel to the plane of motion.

An actuator as described, with an interacting pair of a flat coil support facing a magnet, constitutes an open magnetic circuit. By adding a yoke, the magnetic circuit in which the coil support acts and moves can be closed, which considerably increases the sensitivity of the actuator. As shown in EP 1098304 A, often two of the interacting pairs are used, situated, in the information direction, to the left and right of the lens.

### Invention

The inventors have found a drawback that, if, in a straightforward approach of closing magnetic circuits, each of the open magnetic circuits is independently provided with a yoke directly facing the magnet, at least one of these yokes or the magnets must be positioned between the coil support and the lens, so that the overall dimension of the actuator in the information direction, and correspondingly also the actuator mass, are increased. The invention aims at proposing a pickup with an actuator that is improved in this regard.

A pickup according to the invention is provided with a yoke that is offset in the tracking direction from the actuator lens, or specifically from its optical axis. Such a design will have a magnetic field strength that is less than with a broad yoke facing the magnet, hence is not obvious to the expert. But, inventively, it has several advantages working together to justify its use: The width, in the information direction, of the lens and of the yoke do not add, so that the magnetic circuit of the actuator is closed without increasing the overall dimension of the actuator in the information direction. This allows for a compact actuator with short suspension wires. Also, the more homogenious magnetic field around the coil support, due to the presence of a yoke, causes the actuator sensitivity to depend less on the distance between the coil support and the magnet. Inventively, this bigger tolerance against coil position in the information direction is, in turn, also favourable for the use of shorter suspension wires. For this one has to realise that motion paths of an actuator suspended by parallel elastic suspension wires are not exactly planar but actually lie on a 3D surface similar to a spherical segment with a radius substantially equal to the length of the suspension wires. Therefore, for a given motion range that must be provided in focussing or tracking direction, shorter suspension wires cause the distance between coil support and magnet to vary stronger.

Advantageously, the pickup is provided with two yokes situated, in tracking direction, at both sides of the lens. This has the advantage that tracking and focusing forces of the actuator can be made to be symmetric relative to the center of gravity of the actuator movable part, so that higher order vibrations or inadvertent tilting of the movable part can be avoided or minimised.

Advantageously, in a pickup having two coil support-magnet pairs located side by side in the information direction, the yokes are oriented with their longest dimension in the information direction, such that they connect the magnetic field of the two magnets. This has the advantage of an especially big increase in the actuator sensitivity, because the magnetic circuit between the two magnets does not have to detour from yoke to pickup base and back to the other yoke, but is directly connected on the shortest possible path.

A device according to the invention is a device for accessing optical recording media and has a pickup as described herein.

Exemplary embodiments of the invention are illustrated in the drawings and are explained in more detail in the following description. They refer to the recording medium being an optical disk and to the readout being based on light reflection. Despite this, it is clear to those in the art that the invention can be employed on any kind of optical recording medium having information tracks in layers, like those in card or tape form; and regardless whether the readout principle is of a reflective or of a transductive type.

### Brief description of drawings

In the drawings, throughout which like parts are designated by like reference signs,
- Fig. 1: shows a pickup according to the invention;
- Fig. 2: shows the movable actuator part of the pickup of Fig. 1, enlarged;
- Fig. 3: shows a top view of magnets, yokes and actuator movable part of a pickup according to the invention, with a first and a second yoke design.

### Detailed description of preferred embodiments

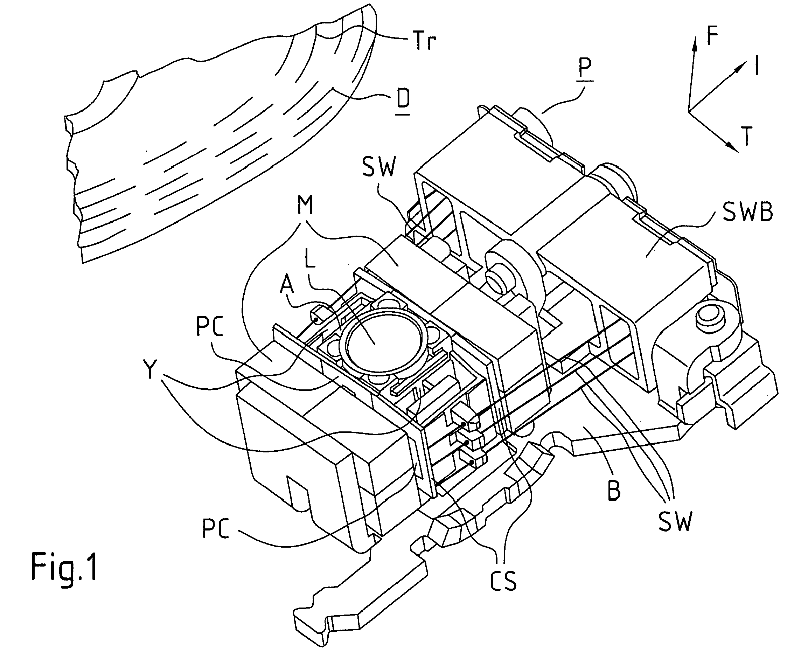

Fig. 1 shows a pickup P for accessing an optical disk D according to the invention. In pickups for optical disks with information tracks Tr in circles or concentric spirals, motion of the medium relative to the pickup is achieved by rotating the disk, for example by a so-called spindle motor, and by moving the pickup in a radial direction relative to the centre of the disk, for example by a step motor or a threaded spindle or an equivalent linear positioning device of the art. The tracking direction T corresponds here to the radial direction, and the focussing direction F corresponds to an axial direction parallel to the rotation axis of the disk. In the following description, a reflective optical disk D is assumed, where the readout beam corresponds to the reflected light beam resulting from the incident light beam being reflected by an outer or inner surface or layer of the disk.

The pickup P shown in Fig. 1 has a pickup base B, a lens L carried by an actuator A, and yokes Y situated in the tracking direction T to the left and right of the lens L. It also has magnets M situated in the information direction I on both sides of the lens L, and printed circuit boards acting as coil supports CS and carrying printed coils PC. The yokes Y connect the magnetic fields of the magnets M facing each other, and the overall elongation of the movable part of the actuator A, in the information direction I, is governed by the maximum, and not by the sum, of the corresponding elongations of the yokes Y and of the lens L, so that a very compact movable part A results.

The movable actuator part A is suspended by suspension wires SW which in turn are fastened at a suspension wire base SWB.

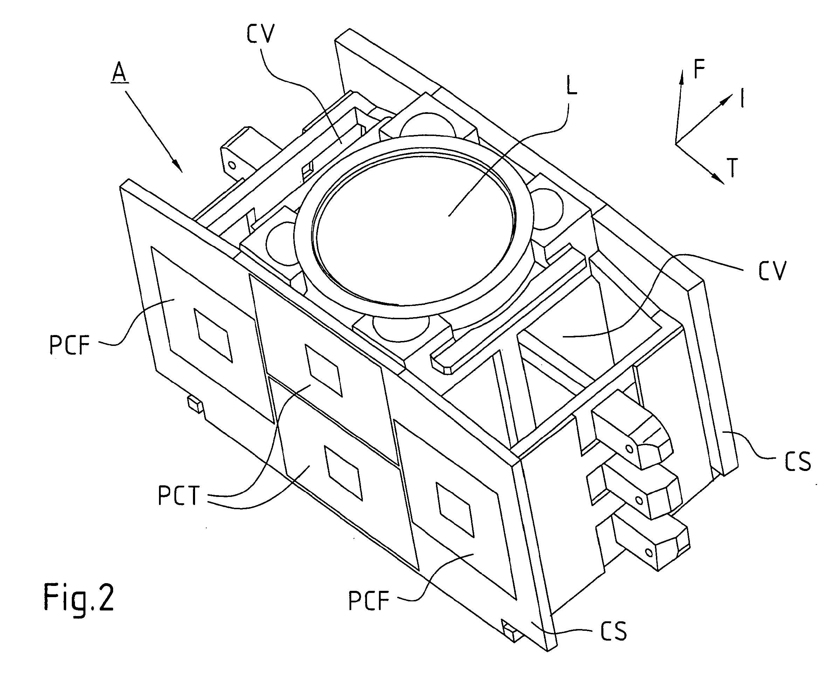

Fig. 2 shows just the movable part of an actuator A according to the invention. It carries a lens L and two parallel coil supports CS. In the tracking direction T, to the left and right of the lens L, the movable part has cavities CV, in which the yokes, not shown here, will protrude when the pickup is fully assembled. The coil supports CS carry focus/tilt printed coils PCF and tracking printed coils PCT. Tilt coils, if present, are placed far away, in the tracking direction T, from the lens L, in order to maximise the lever arm and the tilt torque. Given the relative position of the cavities CV and the printed coils PCT, PCF, it can be seen that an increase of the magnetic field caused by the yokes in the cavities CV is effective primarily for the focus/tilt printed coils PCF, and results in a considerable increase in focus/tilt sensitivity.

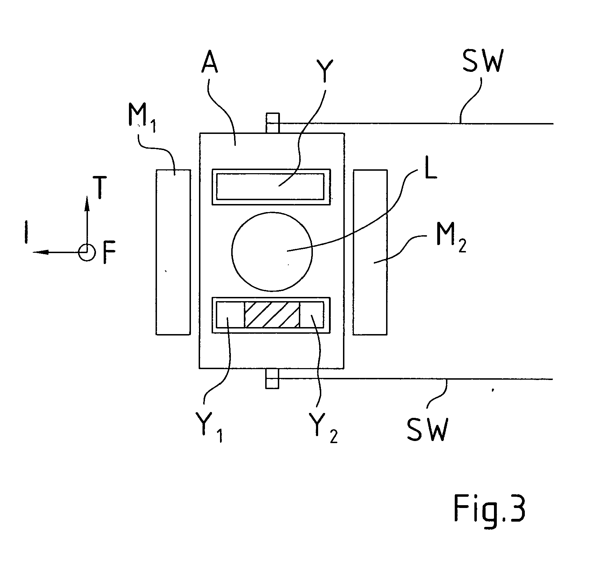

Fig. 3 shows a top view of magnets M1, M2, yokes Y, Y1, Y2 and actuator movable part A of a pickup according to the invention. In the bottom half of Fig. 3, a first yoke design is shown where a first yoke finger Y1 faces magnet M1, and a second yoke finger Y2 faces magnet M2. In this design, too, the overall elongation of the movable part of the actuator A in the information direction I is goverened by the maximum of the elongations of the lens L and of the sum of the yoke fingers Y1, Y2. In this yoke design, a first closed magnetic circuit on the left consists of magnet M1, yoke finger Y1, the airgap between them, and is closed by that part of the pickup base B which is underneath these three. Correspondingly, a second magnetic circuit in mirror symmetry exists on the right at M2, Y2.

There also is a magnetic field between the yoke fingers Y1, Y2, the shape of which depends on the relative polarity of the magnets M1, M2. That field either runs though the air between the yoke fingers Y1, Y2, or it closes by detouring down to the pickup base B.

If, however, as in the second yoke design in the top half of Fig. 3, the yoke Y is shaped such that it connects the magnetic field of the two magnets M1, M2, a direct, stronger and/or shorter magnetic circuit results, which avoids the meandering and runs through M1, Y, M2 and then straight through the pickup base B between them.

From Fig. 3 it also becomes evident that without a yoke, the magnetic lines of force or flux lines would be very divergent when leaving the surface of the magnet M1, M2 facing towards the coil. With the yokes Y, Y1, Y2, however, the flux lines are much more dense and more parallel, especially in the area between the magnets M1, M2 and the yokes Y, Y1, Y2.

With other words, the invention refers to a pickup P for optical recording media having information tracks Tr in a layer, and to a device for accessing optical recording media having such pickup. The pickup P has a focusing servo for position control in a focussing direction F orthogonal to the layer, a tracking servo for position control in a tracking direction T within the layer and diagonal to the information tracks Tr, and a movable actuator A with a coil PCF, PCT on a flat coil support CS interacting with a magnet M on a pickup base B and a yoke Y, where the actuator carries a lens L and the coil support CS faces a surface of the magnet M both parallel to a plane of motion spanned by the tracking direction T and the focus direction F. In order to increase actuator sensitivity without increasing actuator size, a center of the yoke Y is offset, in the tracking direction T, relative to the lens L so that the yoke Y can be placed alongside the lens L.

## Claims

1. A pickup (P) for optical recording media having information tracks (Tr) in a layer, the pickup having a focusing servo for position control in a focussing direction (F) substantially orthogonal to the layer, the pickup having a tracking servo for position control in a tracking direction (T) within the layer and diagonal to the information tracks (Tr), and having a movable actuator (A) with a coil (PCF, PCT) on a flat coil support (CS) interacting with a magnet (M) on a pickup base (B) and having a yoke (Y), where the actuator carries a lens (L) and where the coil support (CS) and a surface of the magnet (M) it is facing both are parallel to a plane of motion spanned by the tracking direction (T) and the focus direction (F), **characterized in that** a center of the yoke (Y) is offset, in tracking direction (T), relative to the lens (L).

2. The pickup of claim 1, having two yokes (Y) situated, in the tracking direction (T), at both sides of the lens (L).

3. The pickup of claim 1, having two pairs of the coil support (CS) facing the magnet (M), the pairs located, in an information direction (I) parallel to a tangent to the information tracks (Tr), on either side of the lens (L), where the yokes (Y) are shaped such that they connect the magnetic field of the two magnets (M).

4. A device for accessing optical recording media, the device **characterised in that** it is provided with a pickup according to one of the previous claims.
